# EUROPEAN PATENT APPLICATION

(11) **EP 4 742 069 A1**
(43) Date of publication of application: **13.05.2026**
(21) Application number: 25213609.8
(22) Date of filing: 05.11.2025
(51) Int. Cl.: G06F 21/51, G06F 21/12, G06F 9/4401

(54) **ZERO-KNOWLEDGE PROOF BASED DEVICE DEPLOYMENT**

(30) Priority: 07.11.2024 US 202463717362 P
(71) Applicant: Mullick Mohammad, Rakib Hassan, Dhaka, 1230 (BD)
(72) Inventor: Mullick Mohammad, Rakib Hassan, Dhaka, 1230 (BD)
(74) Representative: ip21 Ltd

(57) **Abstract**

A computer implemented system and method for automated device deployment using server compromise tolerant, zero-knowledge authentication has been disclosed that generates network configuration specific firmware image and prepares a device for authentication by implanting the authentication data inside the firmware image during the firmware build process. When the firmware image is installed in a target hardware and run by the hardware it sends authentication request to the ZKP server. The system allows further operation to facilitate device configuration if the request from the device is valid.

## Description

### CROSS-REFERENCE TO RELATED APPLICATIONS

This patent application claims priority from U.S. Provisional Application No. 63/717,362 filed Nov. 7, 2024 which application is hereby incorporated in its entirety by reference.

### BACKGROUND OF THE INVENTION

The emergence of new technologies brings new challenges from different directions. The advancement of the Internet of Things (IoT) brings new challenges when it comes to device deployment. Device deployment typically takes place at a customer site to make sure the target device can connect to the Internet. This is also known as "device provisioning".

Most of the IoT devices must be connected to the Internet directly and these devices need to be configured at a customer site to make sure the devices can access to the Internet. If a customer has a Wi-Fi network then the target device needs to be configured with a valid Wi-Fi credentials. If a customer network requires Ethernet connectivity where static IP address is used then the device must have the network configuration with proper IP address. To handle such variety of network configurations the device configuration steps remains as a manual and interactive process. It turned out to be a time consuming task if the number of devices are higher or the deployment area is large. Moreover setting the Wi-Fi credentials each time for all the devices may have security implications and error-prone.

The network configuration data are stored in the non-volatile storage of a particular device. How exactly the network configuration data are stored and maintained depends on the software that the device runs. Sometimes a device runs baremetal software or sometimes it could be running an operating system (OS) based software. The software that runs on a resource constrained, integrated device are often called firmware, they often need to be programmed into a chip. Sometimes this so called firmware is also read from a non-volatile storage device, typically the case for OS based software. In any case when a software is build/generated it does not hold any network configuration data therefore it need to be configured later on. During the device deployment on a customer site a person need to provide the network configuration information manually which overwrites the default network configuration files.

To overcome the limitation of manual configuration of Wi-Fi networks, the WiFi Alliance unveils a mechanism called Device Provisioning Protocol (DPP) that utilizes smartphone for device configuration. To make the process less cumbersome a more flexible approach has been introduced with the help of a centralized server by avoiding user interactions (US11546755B2). Methods like Zero-Touch Provisioning (ZTP) relies on DHCP server where devices can automatically configure themselves without any human intervention. To ensure no unwanted devices get registered the DHCP server needs to be pre-configured. Letting devices directly connect to the Internet may have some downside if devices are not authenticated. Password based authentication scheme has its own limitation and also not best for offering privacy respecting services. Use of Zero-Knowledge proof based authentication has the possibility of dealing with such privacy concern however such authentication method is often hard to integrate due their usages of digital signatures which require maintenance of public/private keys and brings usability issues.

Apart from setting up the network configuration and authenticating a device further configurations may require which could be non-generic, device-specific configuration files such as CA client certificate files or other system configuration files, or a program/script which are required for the device to function properly. Depending on the vendor (or the product) provisioning steps are also referred as commissioning. In short, the process of making a device fully functional before connecting to the Internet can be tedious and open for innovative solutions.

### SUMMARY OF THE INVENTION

According to one of illustrative embodiment, a computer implemented method, a computer program product and a computer system for hack-proof (server compromise tolerant), automated device authentication and deployment is provided. The system builds network configuration specific firmware images and generates authentication artifacts during the firmware build process. The generated authentication artifacts are used by the system to offer zero-knowledge proof based authentication scheme utilizing digital signature based message signing where the server only keeps the public key to verify an authentication request. The system is tolerant to any data breach and offers privacy respecting service. The disclosed system does not require any user interactions at the customer site and enables administrators (or users) to further interact (i.e. copy / delete files) with the device from a remote location. The system generates authentication artifacts during the firmware build process consists of two parts, one part is the client authentication artifact that is injected into the generated firmware image (the client authentication artifacts) and the other part is stored in the system itself ( the server authentication artifacts ). The system receives the necessary configurations to prepare the firmware image as a parameter. By allowing integration of customer specific network configurations the system produces firmware image that is already configured for a customer therefore the customer specific configuration is not needed during the device deployment. For device authentication the system injects unique IDs (i.e. UUIDs) for each generated firmware images to make them uniquely identifiable. A sequence number is additionally used to uniquely identify devices sharing a single network configuration. The target device verifies itself by providing the signed message using a private key that was injected during the firmware build process.

The network configuration specific firmware image doesn't require any manual intervention at the customer site to connect to the Internet. The disclosed embodiment further allows the ability to communicate with the deployed device for remote administration ( or also can be dubbed as remote provisioning ). The system will hereinafter referred to as a Zero-Knowledge Provisioning (ZKP) system.

The disclosed embodiment further allows externally generated firmware images by providing the necessary ( compatible ) authentication artifacts which can be used during the device authentication. In this way of configuring allows the ZKP system to provide device authentication service. The disclosed embodiment offers an automated way of generating firmware image where it receives the network configuration or UUID from a database and can be invoked externally. This way network configuration specific firmware images can be generated without any manual intervention and all the images will be stored for future use.

### BRIEF DESCRIPTION OF DRAWINGS

The present disclosure in accordance with one or more embodiment is described in detail with reference to the following figures. The figures are provided for illustration purpose only not drawn to scale and merely depict an example embodiment.
FIG. 1 is an illustration of an exemplary Zero-Knowledge Provisioning (ZKP) system and its various components.
FIG. 2A shows block diagram of firmware image generation process triggered by a user or by another program.
FIG. 2B shows block diagram of the device authentication process by outlining the steps how the system handles a provisioning request and authenticates the device.
FIG. 3A illustrates the conversation like authentication scheme between the IoT device and the ZKP system. FIG. 3B illustrates an exemplary authentication artifact (server side) in JSON format. FIG. 3C illustrates an exemplary authentication artifact (client side) in JSON format.
FIG. 4A illustrates an example of message signing and authentication artifact creation code snippet. FIG. 4B illustrates an exemplary firmware build request parameter.
FIG. 5 shows an example computing device used to implement various embodiment described in the present disclosure.

### DETAILED DESCRIPTION OF THE INVENTION

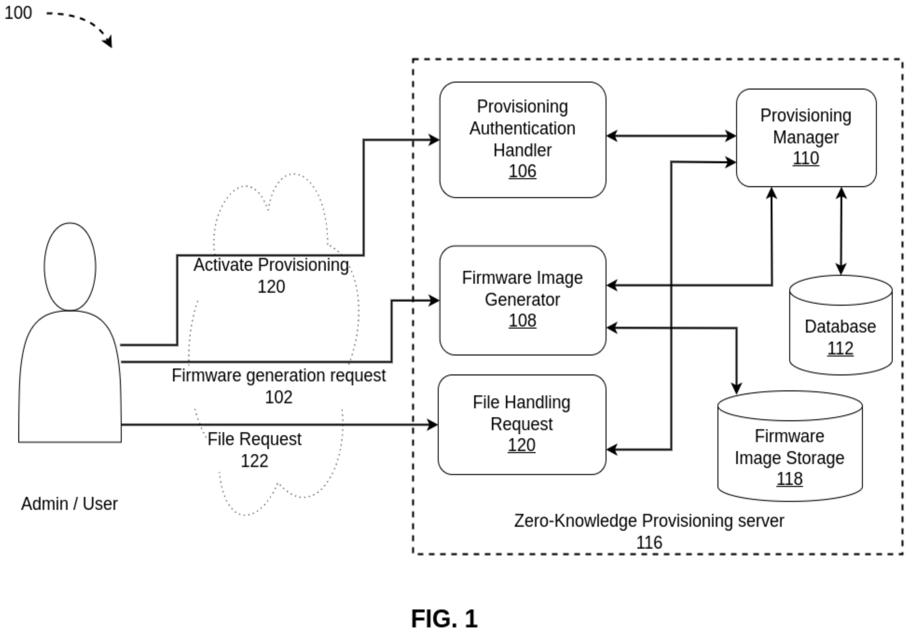

FIG. 1 illustrates an exemplary Zero-Knowledge Provisioning (ZKP) system (100). The system offers various functionalities and for better understanding of the system all functionalities are divided into multiple blocks. In other embodiments the system can be described by naming the blocks or functionalities in different ways.

The exemplary Zero-Knowledge Proof (ZKP) system (100) begins working with a firmware image generation request (102) triggered by a user or an external component (e.g., another program). The user can be anyone who is authorized to use the system either for administrative or non-administrative purposes. The embodiment of this disclosure are applicable to any computing device that operates in conjunction with access to digital information stored on for example, the Internet. One of ordinary skill in the art may recognize that embodiments of this present disclosure can be implemented on the Internet, on a closed network, on a hybrid open and closed network, or on a cloud network etc. A user can interact with the system through a web interface, from an external command, or via a continuous integration (CI) pipeline. Offering various options to trigger a firmware image generation request (102) increases the opportunity for the system to be integrated with other systems and expand its capabilities to accommodate a wide range of users. The firmware image generation request (102) will be handled by the Zero-Knowledge Provisioning (ZKP) server (116) that checks for required parameters before starting the actual build operation. In some embodiments, the request (102) for generating a firmware image may take the form of a Representational State Transfer (REST) request. REST is an architectural style that defines rules and properties based on Hypertext Transfer Protocol (HTTP). Web services following the REST architectural style are commonly known as RESTful web services. In some embodiments, the user can submit a firmware generation request (102) from the command line or any other automated workflow such as Continuous Integration (CI) pipeline. The firmware image generation request (102) accepts a parameter that may include information like the type of firmware, firmware version, UUID, system configuration files or file content, etc. A configuration file may contain WiFi credentials, static/dynamic IP settings for Ethernet connection, or Virtual Private Network (VPN) information, among other possibilities.

The firmware build process will be carried out once the necessary parameters are received by the Firmware Image Generator (FIG) (108). During the firmware build process the build system will use a UUID (or a randomly generated unique seed) as an unique identifier. The UUID can be user provided or extracted from a database or auto-generated by the ZKP server / FIG (108). The FIG (108) is capable of generating firmware images that are either baremetal firmware image or operating system (OS) based firmware image. Baremetal firmware images are also known as OS-less firmware which runs directly on the target hardware. Baremetal firmware generation tools are often provided by the hardware vendors or can be free and open source licensed software framework like, Zephyr, FreeRTOS. On the other-hand the OS based firmware are typically generated with tools like Yocto/Buildroot or can be hardware vendor provided tools. Hardware vendors often provide build tools for custom firmware generation for a specific hardware. The term firmware typically refers a software that is specifically meant for resource-constrained hardware devices with limited computing capabilities and to be programmatically stored in a chip based storage. Hereinafter the term firmware will be used to refer both OS-based and OS-less software whether they are stored programmatically in a storage device or not.

Once the firmware image is generated-which is a software process-the Firmware Image Generator (FIG) (108) will produce an artifact for device authentication i.e. authentication artifact. An authentication artifact has two parts - a server part consist of a UUID, a sequence and a public key to be stored in the ZKP server; and the other part (client part) is a payload comprising a message, a signature (signed hash), a UUID and a sequence number - which is injected in the generated firmware. The signature or signed hash is often regarded as digital signature. The term signature or signed hash or digital signature will be used interchangeably and will refer to the same thing hereinafter. The ZKP server can be configured with different types of authentication scheme i.e. username and password based authentication where a randomly generated password is stored at the device firmware and the password hash is stored at the ZKP server. The FIG (108) generates more than one authentication artifact against a single UUID - in other words the ratio of the generated UUID and authentication artifact is 1:N - where N is a positive integer determined by the number of possible devices under a single network. Once a target device is running the firmware image it sends signed message to the ZKP server ( during the booting stage ) and the ZKP server checks the authenticity of the message by using the public key. The ZKP server uses the UUID and the sequence number to identify the target device. The ZKP server uses the public key to verify the signed message (i.e. authentication token) received during the device authentication. Similarly when utilizing the traditional password based authentication scheme the ZKP server can generate random password and injected into the generated password into the firmware image and configuring the ZKP server for password based authentication accordingly.

The ZKP server (116) also accept authentication artifacts externally considering the external party provides the necessary data to construct the authentication artifacts. In such case the FIG (108) is only responsible for injecting the authentication artifact inside the firmware and will store the device server side authentication artifact for authentication purpose. The ZKP (116) server does not keep track of the authentication artifacts other than just injecting into the firmware. Only the device running the firmware is in possession of the necessary private key or secret passphase which is required for the authentication. The authenticating device sends the hashed payload or signed message to the verifier during the authentication stage.

The Firmware Image Storage (FIS) (118) is responsible for storing the generated firmware images from FIG (108). The FIS (118) can store firmware images in a database or directly in a filesystem using unique filenames and UUIDs to track the stored image. It also can be a remote server accessible over communication links. The stored firmware images are available for download and ready to be installed in a real hardware before the deployment.

The device authentication artifact will be passed to the Provisioning Manager (PM) (110) that is responsible for managing the device authentication artifacts. The PM (110) is also responsible for managing the UUID and the authentication tokens. During the device authentication it provides the requested authentication token against a particular UUID. It also keeps track of the device's provisioning status. The PM (110) utilizes a database (112) for the maintenance of the data.

The Provisioning Authentication Handler (PAH) (106) is responsible for handling activate provisioning request (120) and instructs the PM (110) to activate provisioning for a particular device. A device's identity is generated when the PM (110) receives device authentication artifacts for the first time. When the PM (110) stores the authentication artifacts it also internally keeps track of the provisioning status of the device. Initially all device's provisioning possibility is turned off. Upon receiving a provision activation request (120) by the PAH (106) it instructs the PM (110) to turn on the provisioning possibility for the requested device. Activate provisioning request (120) includes a UUID indicating which device's provisioning should be enabled. There could be a delay between generating the firmware image and activating provisioning since the device may have to wait to be shipped to the customer site before it is available for provisioning. In general the PM (110) is responsible for managing the device authentication artifact including adding, deleting, updating etc.

The initial task of the Zero-Knowledge Provisioning (ZKP) server is to generate a network configuration-specific firmware image and prepare the server with necessary authentication artifacts. A single user may have multiple network settings such as different WiFi configurations like WPA & WPA2 Personal or Enterprise. In such case, multiple firmware images are required and the number of images generated depends on the variety of network configurations. For example, if a customer brings 100 devices and there are three deployment sites each running different network types with distinct network configurations, such as two networks with WPA2 Personal (each with different SSID and password) and one network with WPA2 Enterprise credentials. In such scenario, the user should create three different firmware images, two firmware images with WPA2 Personal credentials with their respective configurations, and a third firmware image with the WPA2 Enterprise credentials.

The generated firmware images are installed on a target device using a method that depends on the medium the target device boots from. The boot medium of a device can be eMMC, MMC, NAND, Flash memory, or similar. Once the firmware image is successfully installed on the target device it is ready to be deployed at the customer site. During the device startup it will send a provisioning request directly to the PAH (106) which handles the authentication request. In some embodiment the PAH (106) may use RESTful web services for accepting requests and the device must use REST clients to communicate with the RESTful web service. Communicating over a RESTful API has advantages such as it is very well-known, easy to implement and less likely to have communication ports blocked in a corporate network or in a restricted network. Other benefit a RESTful web service can offer is a secure communication channel. In some embodiment PAH (106) may use other implementation methods for accepting provisioning requests, such as using raw communication protocol by defining its own application layer or Protocol Buffer (protobuf) based implementations. In some resource-constrained low-end IoT devices running a RESTful client may not be feasible. In such case, using a raw communication protocol can be advantageous regardless the underlying transport layer TCP/UDP. The embodiment described here are merely exemplary and should not be considered exhaustive, as one of ordinary skill in the art may appreciate that there could be other ways of communication.

During authentication the PAH (106) uses assistance from the Provisioning Manager (PM) (110) by requesting authentication data corresponding to the device's authentication artifact which was stored during firmware image build (FIG. 1) (108). This method ensures that the unique data cannot be duplicated and guarantees the authenticity and originality of the device.

A database (112) is used to store the device authentication artifacts which can be of any type such as relational, non-relational, or file-based, depending on the provider's preference. The database (112) can run on the same computer or on a separate computer accessible through a communication link. The embodiment presented in this disclosure are for exploratory purposes only; there could be alternative embodiment that use a single database for both type data storage, such as combining the functionality of the Database (112) and the Firmware Image Storage (118).

The ZKP (116) server may offer further provisioning operations such as, copy configuration files to the target device. The File Handling Request (FHR) (120) module is responsible for managing such operations and done once the device is authenticated successfully. This facility enables users to perform various file transfer operations to the target device such as copying an application or script or deleting a file. To perform these operations an Add/Remove/Update file request (122) is sent to the ZKP (116) server with a parameter indicating one or more files. File operations are only possible if they are allowed on the target device as they involve manipulation of the file system and the running agent (software) on the device must be capable of that can accepting such request from the ZKP (116) server. Some embodiment can utilize tools like ansible/chef or similar for delivering such functionality.

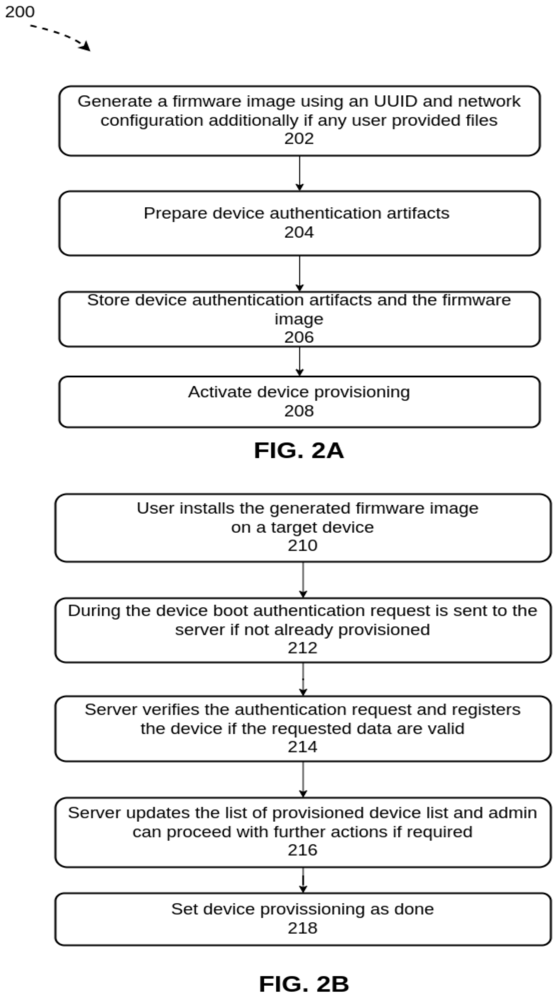

FIG. 2A depicts a flowchart (200) illustrating the sequential steps carried out to generate a network configuration-specific firmware image and associated device authentication artifact. The flowchart (200) includes steps that will be discussed in reference to various components depicted in FIG. 1.

The flowchart (200) begins indicating a request to generate a firmware image which includes at least customer network configuration as a parameter. A network configuration file is part of system configurations file therefore system or network configuration will be used interchangeably. Optionally, it also accepts a UUID provided by the user which may correspond to the device's serial number or an unique identifier managed by the device manufacturer/vendor. The network configuration also can be fetched from a remote server if a public Unified Resource Locator (URL) is provided. To generate the firmware image the ZKP system may use various firmware generation tools like Yocto, Buildroot or any vendor-provided/recommended open source tools like Zephyr etc. Once the firmware image has been produced with the requested parameters, the next step (204) prepares the device authentication artifact. The two part authentication artifact is generated for each device and for each device there could be plurality of authentication artifacts. Firmware build tool like Yocto provides various ways to integrate any file into the generated firmware image (i.e. the operating system), one possible way is to use a tool called wic. wic can be used to inject any file inside the generated firmware image after the build is finished therefore suitable for creating multiple images with different configuration files or authentication artifact from a single image. The ZKP server may generate multiple authentication artifacts for each firmware. The generated authentication artifact can be hash of a particular file's content or a signed message using a private key and the corresponding public key to be stored at the server side or a simple password based authentication - the system can accept any of these method of authentication.

The generated firmware images and associated device authentication artifacts are stored in a database (206). Once the storage operation (206) is complete the user activates device provisioning (208). The ZKP server maintains a state of all the devices indicating if all devices were successfully provisioned or not.

FIG. 2B depicts another flowchart outlining steps involved in device authentication and the embodiment described herein with references made to various elements of FIG. 1.

The user downloads the firmware image from FIG (118) (referring to FIG. 1). By checking the UUID/serial number of the device the user ensures that the exact firmware image has been installed onto the target device which is ready to be shipped at the customer site (210). It is important to confirm if a custom user-provided UUID (i.e., serial number) was used during the build process; the user must download the corresponding firmware for the target device. Additionally, the user must verify if there is any correlation between the UUID and the target device for instance when a device is sold to a customer - only the sold device's UUID/serial number specific firmware should be used. The described process may modify existing provisioning methods; however, it simplifies the overall operations, offers better management possibilities and creates a hassle-free experience where no on-site interaction is required.

When a device is powered up for the first time it will send authentication request to the ZKP server (212). Since it already contains the network configuration files (e.g., WiFi settings) it will have no trouble accessing the Internet. The authentication request should be sent during boot process and can be configured as a background service. In a GNU/Linux-based OS, the background services are managed using utility services like sysvinit or systemd. For example, an init script can be configured by setting a proper priority level and dependencies. The script/program is then placed inside the /etc/init.d directory to be executed by the sysvinit and setting the priority is a way as if the script gets called after the networking services are activated. Networking services are responsible for activating network interfaces based on the configuration files. Other embodiment may adopt different tools to achieve similar results. In OS-less firmware devices a similar approach should be taken but implementation details will differ. There are well-known bare-metal firmware frameworks like Zephyr that provides libraries supporting a wide range of devices and functionalities including networking, such libraries can be utilized for Zephyr based firmware to communicate with the ZKP server. To offer Zephyr based solutions a library ( or header file) can be developed that offers an unified API which will be integrated by the application. Any user of the ZKP system will use the header file to develop firmware code. Other embodiment may utilize vendor-provided firmware libraries or tools to achieve the similar results.

An example of an authentication request may take the format: REQID AUTH PYALOAD, where REQID is a randomly generated unique number identifying the request, AUTH indicates an authentication request and PAYLOAD is an object containing the authentication data. The PAYLOAD is determined for each firmware image differently and is done by the firmware image generation (referring to Firmware Image Generator 108, FIG.1 ) process. The command format used in this example is for explanatory purposes only; communicating systems and implementations may use different names as command tokens.

Upon receiving a authentication request the ZKP server verifies the validity of the provided authentication request (214). The ZKP server verifies the request by extracting the PAYLOAD. This involves verification of the token using the public key or just comparison of the hashed value. The generated token is then compared against stored authentication token (referring back to 206 from FIG. 2A). If there's a match of the authentication token value then authentication is successful. Some later embodiment offers a more detailed description of the authentication process.

After verifying the device the ZKP server register it as provisioned (216). The user of the ZKP server can view their newly provisioned device by requesting a list of provisioned devices. At this point, the user can perform additional actions on the target device such as adding/copying/deleting files/programs or executing commands (216). For instance, the user might want to run a program that communicates with a specific server to start the device's operation. It is important to note that in the production stage it was not determined which server(s) a particular device need to communicate. At this stage, the device is marked as provisioned (218) and has no further bindings to the ZKP server. The provisioning agent/program/code running on the device (or prover) may stop executing or maybe removed and leaving more resources back to the device.

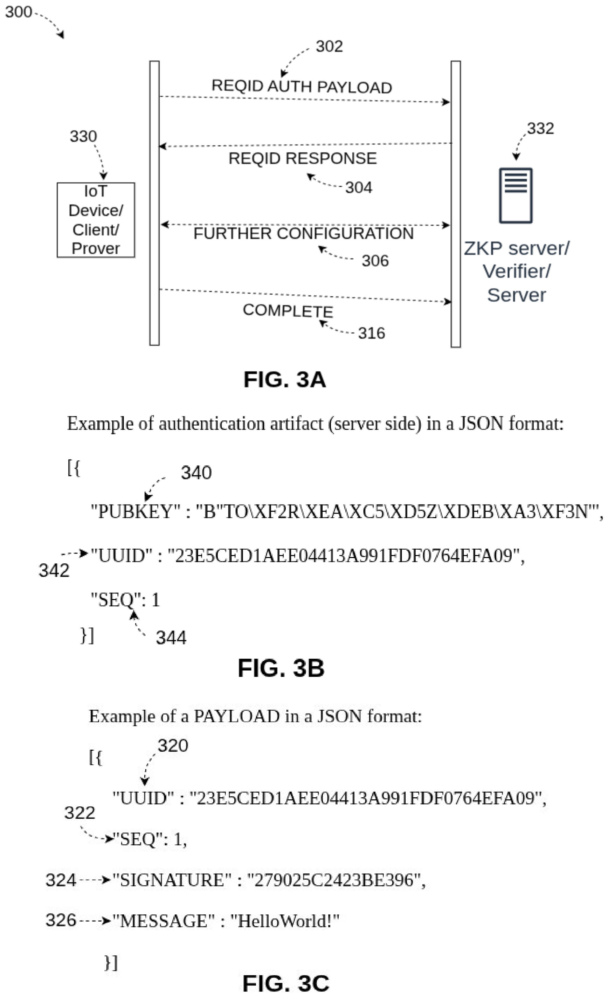

FIG. 3A illustrates a sequence diagram outlining how the authentication takes place between a device and the ZKP system. A sequence diagram (300) helps understand a communication between two parties in a step-by-step manner. Previous embodiments outlines the authentication as part of the whole process whereas FIG. 3A emphasizes on authentication messages between two parties in a more precise way. Moreover the illustrated authentication method in FIG. 3A mimics the zero-knowledge proof where one party ( the prover ) can convince another party ( the verifier ) without exposing anything else other than the fact of that statement's truth.

The two communicating parties in FIG. 3A are an IoT device (330) ready to be provisioned and a ZKP server (332) (116 referring to FIG. 1). The communication between two parties does not depend on any particular protocol like, HTTP, HTTP2, raw (custom application protocol), TCP/UDP etc. or any message format like, JSON, XML, YAML etc. From the zero-knowledge proof's perspective the IoT device (316) act as a prover and the ZKP server (318) is the verifier. The ZKP server (318) only stores the public key required for verification. The ZKP server (318) does not hold the target IoT devices's (306) critical information that would jeopardized the client if the server is somehow compromised. The IoT device sends the first authentication request command (302) comprising a randomly generated request id (REQID), the command (AUTH) indicating an authentication request and a PAYLOAD comprising a signed message which to be verified using a pre-stored public key. A PAYLOAD can also consist of hashed value of the UUID or any secret or any device configuration file's hashed content which is to be compared with stored hashed value. A properly constructed request it is sent to the ZKP server (332) and the IoT device (330) waits for the response.

After receiving the request by the ZKP server (318) it authenticates the request and sends a response (304) to the requesting IoT device (316). The response comprising the REQID and a status indicating SUCCESS or FAIL wherein the REQID is the same ID that ZKP server (318) received from the IoT device (316) in step-1. If the response is SUCCESS then the authentication is successful and complete. Once the authentication is successful the device is open for further configuration if needed. The ZKP server (332) tracks the number of successful and unsuccessful request was sent by the IoT device. Once the IoT device (316) receives the SUCCESS response then it keeps the communication for further provisioning until a COMPLETE response is sent (314).

FIG. 3B illustrates an exemplary authentication token (i.e. authentication artifact - server side) that is stored on the ZKP server in a JSON format. JSON is an open standard and data interchange format organizes data in name-value pairs and arrays - highly popular among software developers and used in various forms of electronic data interchange and data storage format. JSON uses human-readable texts which is easier for developer to work with as they don't need any special tools for decoding/debugging the data. Other embodiments can use different formats like, XML, Protobuf messaging format, YAML etc. Popular protocols like HTTP supports JSON based data exchanges highly popular among developers. An authentication artifact contains two fields - PUBKEY (340) is a public key in a string format, in this exemplary demonstration the said public key is generated using Python3 programming language's ecdsa library. Some other embodiment may use different programming language/libraries to implement the functionality. UUID (342) is the firmware specific unique identifier. The ZKP server will store multiple authentication token against each UUID and SEQ (344) is used to track these authentication tokens. The number will remain an implementation specific factor which will depend on use cases like, number of users or any specific user requirements etc.

FIG. 3C illustrates an exemplary payload in JavaScript Object Notation (JSON) format. The exemplary JSON format shows an element of name-value pairs wherein the name indicates the type of value it contains. This payload is received by the Provisioning Manager (referring FIG.1). UUID (320) and SEQ (322) is used to find the public key that is stored during the firmware generation process. SIGNATURE (324) indicates the signed hash (or signature) that needs to be verified by using the stored public key and MESSAGE (326) is the text from which the signed hash was generated, it can be a randomly generated text. Other embodiment may use different formats like, XML, Protobuf messaging format, YAML etc. The format may be dependent upon the underlying storage system the ZKP server is using.

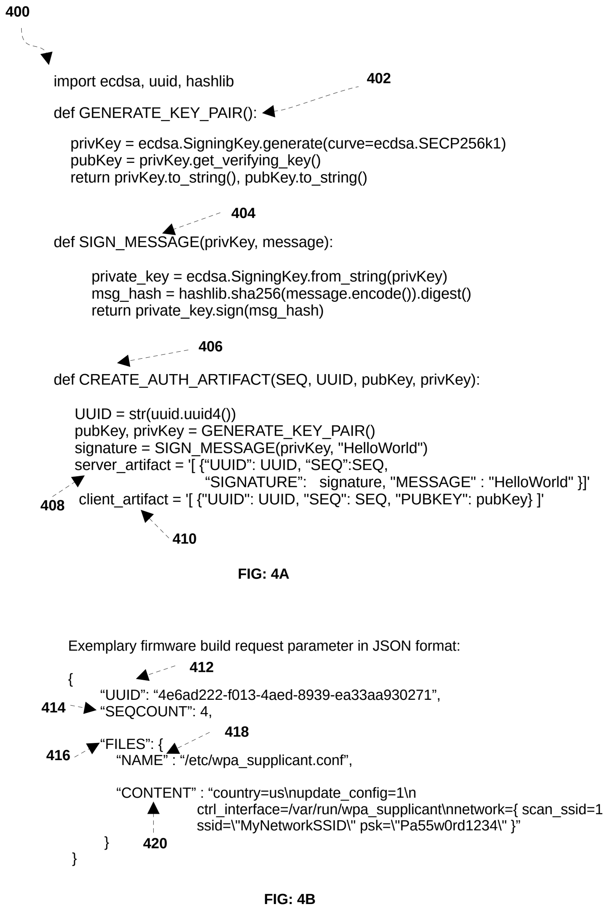

FIG. 4A shows an exemplary key generation and message signing code implemented in Python3. The code block (400) shows how server side and client side authentication artifacts can be generated. The GENERATE_KEY_PAIR function (402) is responsible for generating public key and private key pair using ecdsa library. The SIGN_MESSAGE function (404) takes a private key and a message as parameter then signs the hashed message before returning. The function CREATE_AUTH_ARTIFACT (406) prepares the authentication artifacts in two parts - the server (ZKP server-side) artifact (408) and the client (ZKP client-side) artifact (410). In this exemplary demonstration the CREATE_AUTH_ARTIFACT function receives the sequence number (SEQ) from outside. Some other embodiment may use different programming language and different implementation, function names, libraries so that one of ordinary skill in the art may recognize that embodiments of this present disclosure can implement using any relevant programming languages. This functions ( or similarly implemented functions ) to be invoked by the firmware build process to generate the authentication artifacts and prepare the firmware images for authentication.

FIG. 4B shows an exemplary firmware image build request parameter in JSON format. Some other embodiment may use different format and structure and name the contents differently than the exemplary format shown here. The request contains an UUID (412) field to uniquely identify a firmware image for a specific network. The UUID (412) can be optional and in such case the firmware build process is responsible for generating the UUID. The field SEQCOUNT (414) is a positive integer indicating how many copy of this generated firmware should be made. The SEQCOUNT (414) in conjunction with UUID (412) is used to identify a particular device. The SEQCOUNT (414) field is particularly required for device authentication and used during the authentication to identify required authentication artifacts. FILES (416) contains a list of file name NAME (418) and their content CONTENT (420). The NAME (418) provides the specific location where the file should be stored. CONTENT (420) is the content of the file specified in NAME (418). In this example, the FILES (416) has one file with NAME (418) and the CONTENT (420) which indicate the WiFi configuration file for a specific GNU/Linux based firmware image that is configured to use wpa_supplicant for WiFi connectivity management.

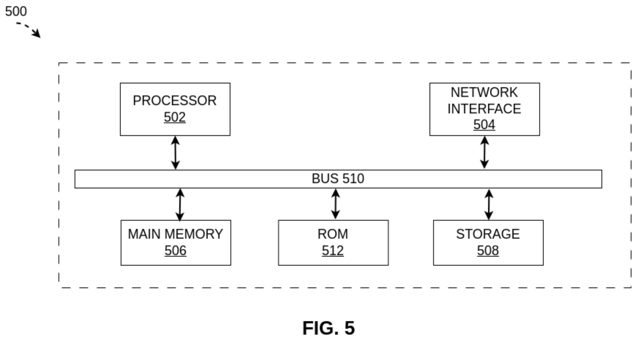

FIG. 5 illustrates certain components within a computer system (500). One or more computer systems (500) maybe used to implement the various devices, components, servers, the system, the services/methods described herein.

The computer system (500) includes a processor (502). The processor (502) may be a general-purpose or a special purpose single or multi-chip microprocessor (e.g., an Advanced RISC (Reduced Instruction Set Computer) Machine (ARM)), a special purpose microprocessor (e.g., a digital signal processor (DSP)), a micro-controller, a programmable gate array, etc. The processor (502) may be referred to as a central processing unit (CPU). Although just a single processor (502) is shown in the computer system 500 FIG. of 5, in an alternative configuration, a combination of processors (e.g., an ARM and DSP) could be used.

The computer system (500) further includes main memory (506) a form of volatile memory such as Random Access Memory (RAM) found in contemporary computing systems used in workstations, servers, Single Board Computers (SBC), System-on-Chip (SoC) or System-on-Module (SoM) etc. Main memory (506) may be used for storing program's instruction and data during execution of instructions to be executed by processor (502).

The computer system (500) further comprises a Read Only Memory (ROM) (512) a form of non-volatile memory which is limited in size and holds some key information required for the computer system to run properly. Typically ROM data is read by the processor when the system is powered up and has no data in the main memory (506), ROM holds the instructions that is to be loaded in the main memory (506) and execute by the processor (502).

The other form of non-volatile memory the computer system (500) can have is storage (508) which can hold amount of data that is not suitable to store in other form of memories like, main memory (506) or ROM (512). The computer system (500) may need various program to conduct its operations, these programs may be written in various programming languages like, C, C++, Java etc. and storage (508) is place where these programs are stored. Storage (508) is also the key hardware for providing support for databases which is used in the disclosed ZKP server and plays a pivotal role in implementing/running the ZKP server.

The computer system (500) uses network interface (504) for communicating with the other computer systems. The embodiment described in this disclosure makes active use of the network interface for sending/receiving messages that makes the whole system to work as intended. The computer system (500) may have different type of network interface (504) like wire based or wireless network interface.

All the components of the computer system (500), the processor (502), the network interface (504), the main memory (506), the ROM (512) and the storage (508) are connected via a common channel called bus (510).

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiment.

Firmware refers to a software that is embedded in a hardware device, providing low-level control for the device specific hardware and directly interacts with the hardware. An operating system, on the other hand, is a software that manages computer hardware, software resources, and provides API for higher level computer application. A development tool or toolchain or build tool or software development kit (SDK) - used by developers to generate a firmware or an operating system image or to compile an application along with accompanied libraries for a specific hardware platform and throughout this document these terms are used interchangeably. Firmware image refers to a special file which is in its installable form and ready to be installed in a target hardware to make that particular hardware fully functional therefore an important prerequisite for a functional hardware.

As used herein, non-transitory computer-readable storage media (devices) may include RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

The steps and/or actions of the system described herein may be interchanged with one another without departing from the scope of the claims. In other words, unless a specific order of steps or actions is required for proper operation of the system that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

The present disclosure may be embodied in other specific forms. The described embodiments are to be considered as illustrative and not restrictive. The scope of the disclosure is, therefore, indicated by the appended claims rather than by the foregoing description.

### TECHNICAL FIELD

The present disclosure relates to the technical field of IoT device deployment and integration of Zero-Knowledge proof like authentication scheme.

## Claims

1. A computer system for network configuration specific firmware image generation that provides automated device deployment and server hack-proof authentication, comprising:
a bus system that connects various input/output and processing devices in a computer system;
a network interface connected to the bus system and to communicate with external systems;
a non-volatile storage device connected to the bus system or over network wherein the storage device stores program instructions and to be used for data storage;
a processor connected to the bus system;
a volatile storage device connected to the bus system wherein the volatile storage device holds instructions to be executed by the processor;
wherein the system is configured to:
receive, a firmware image generation request with a parameter comprising customer specific system configurations;
generate, plurality of firmware images, plurality of authentication artifacts based on the requested customer specific system configurations wherein the authentication artifacts are consist of two parts, one part for the server and the other part for the device/client;
inject, the client part of the authentication artifacts inside the generated firmware image;
store, the server part of the authentication artifacts and the generated firmware image;
delete, the private key used to generate the authentication artifact;
receive, provision activation request comprising a UUID and a sequence number;
authenticate, a device that is running the generated firmware image, the authentication steps further comprising:
receive, an authentication request with a parameter comprising a message,
a signed hash ( signature ), an UUID and a sequence number;
identify, the corresponding public key using the received UUID and the sequence number;
generate, a signed hash ( signature ), using the identified public key;
compare, the generated signature with the received signature;
allow, users to connect to a target device and perform operations like, copy, delete files, execute programs/scripts;
track, the list of successfully deployed devices.

2. The computer system of claim 1, further configured to use password based authentication wherein the said password is injected during the firmware image generation process and the authentication request comprising an UUID, a sequence number, password.

3. The computer system of claim 1 or claim 2 wherein the said firmware image generation request parameter further comprises a sequence number or count indicating how many authentication artifacts should be generated under a single UUID.

4. The computer system according to any preceding claim, further configured to generate multiple authentication artifacts for a single device authentication.

5. The computer system according to any preceding claim, wherein the firmware image is an operating system based image or a baremetal, OS-less, image.

6. The computer system according to any preceding claim, further configured for device authentication only wherein the necessary system compatible authentication artifacts are provided.

7. A computer-implemented method for network configuration specific firmware image generation that provides automated device deployment and server hack-proof authentication, the computer-implemented method comprising:
receiving, a firmware image generation request with a parameter comprising customer specific system configurations;
generating, plurality of firmware images, plurality of authentication artifacts based on the
requested customer specific system configurations wherein the authentication artifacts are consist of two parts, one part for the server and the other part for the device/client;
injecting, the client part of the authentication artifacts inside the generated firmware image;
storing, the server part of the authentication artifacts and the generated firmware image;
deleting, the private key used to generate the authentication artifact;
receiving, provision activation request comprising a UUID and a sequence number;
authenticating, a device that is running the generated firmware image, the authentication steps further comprising:
receiving, an authentication request with a parameter comprising a message, a signed hash ( signature ), an UUID and a sequence number;
identifying, the corresponding public key using the received UUID and the sequence number;
generating, a signed hash ( signature ) using the identified public key;
comparing, the generated signature with the received signature;
allowing, users to connect to a target device and perform operations like, copy, delete files, execute programs/scripts;
tracking, the list of successfully deployed devices.

8. The computer-implemented method of claims 7, further configured to generate multiple authentication artifacts for a single device authentication.

9. The computer-implemented method of claims 7 to 8, wherein the firmware image is an operating system based image or a baremetalOS-less, image.

10. The computer-implemented method of claims 7 to 9, further configured for a device authentication only wherein the compatible authentication artifacts of the device are provided.

11. A computer program product for network configuration specific firmware image generation that provides automated device deployment and server hack-proof authentication, the computer program product comprising a non-transitory computer readable storage medium having program instructions embodied therewith, the program instructions executable by a computer to cause the computer to perform a method comprising:
receiving, by the computer program, a firmware image generation request with a parameter comprising customer specific system configurations;
generating, by the computer program, plurality of firmware images, plurality of authentication artifacts based on the requested customer specific system configurations wherein the authentication artifacts are consist of two parts, one part for the server and the other part for the device/client;
injecting, by the computer program, the client part of the authentication artifacts inside the generated firmware image;
storing, by the computer program, the server part of the authentication artifact and the generated firmware image;
deleting, by the computer program, the private key used to generate the authentication artifact;
receiving, by the computer program, provision activation request comprising a UUID and a sequence number;
authenticating, by the computer program, a device that is running the generated firmware image, the authentication steps further comprising:
receiving, by the computer program, an authentication request with a parameter comprising a message, a signed hash ( signature ), an UUID and a sequence number;
identifying, by the computer program, the corresponding public key using the received UUID and the sequence number;
generating, by the computer program, a signed hash ( signature ) using the identified public key;
comparing, by the computer program, the generated signature with the received signature;
allowing, by the computer program, users to connect to a target device and perform operations like, copy, delete files, execute programs/scripts;
tracking, by the computer program, the list of successfully deployed devices.

12. The computer program product of claim 11, further configured to use password based authentication wherein the password is injected during the firmware image generation process and the authentication request comprising an UUID, a sequence number, password.

13. The computer program product of claim 11 or claim 12, wherein the said firmware image generation request parameter further comprises a sequence number or count indicating how many authentication artifacts should be generated under a single UUID.

14. A computer program product for automatically sending authentication request during a device startup and provisioning the device, the computer program product comprising a non-transitory computer readable storage medium having program instructions embodied therewith, the program instructions executable by a computer to cause the computer to perform a method comprising:
sending, by the computer program, an authentication request with a parameter
comprising a signed hash (signature), an UUID, a text/string and a sequence number wherein the signed hash is generated from the said text/string;
receiving, by the computer program, a response if the authentication request is successful or not;
receiving, by the computer program, a request to download, receive a file or execute any program or delete any file.

15. The computer program product of claim 14 wherein the parameter of the said authentication request is injected during the firmware build process.
